# EUROPÄISCHE PATENTSCHRIFT

(11) **EP 3 073 595 B1**
(45) Veröffentlichungstag und Bekanntmachung des Hinweises auf die Patenterteilung: **10.06.2020**
(21) Anmeldenummer: 16167396.7
(22) Anmeldetag: 13.01.2011
(51) Int. Cl.: H02J 1/10, G05F 1/56, H02H 3/08

(54) **REDUNDANZMODUL MIT SYMMETRISCHEN STROMPFADEN**
REDUNDANT MODULE WITH SYMMETRICAL CURRENT PATHS
MODULE DE REDONDANCE COMPRENANT DES TRAJETS DE COURANT SYMETRIQUES

(30) Priorität: 13.01.2010 DE 102010004644
(43) Veröffentlichungstag der Anmeldung: 28.09.2016
(62) Teilanmeldung aus: 11702923.1
(73) Patentinhaber: PHOENIX CONTACT GmbH & Co. KG, 32825 Blomberg (DE)
(72) Erfinder: Henkel, Hartmut, 32825 Blomberg (DE); Heinemann, Michael, 32791 Lage (DE); Neuendorf, Andreas, 32839 Steinheim (DE)
(74) Vertreter: Blumbach · Zinngrebe Patentanwälte PartG mbB

(56) Entgegenhaltungen:
- WO-A2-2007/140203
- DE-C1- 19 722 127
- US-A- 4 618 779
- US-A- 5 592 394
- US-A- 5 672 958
- US-A1- 2005 078 424
- US-A1- 2009 322 156
- US-B1- 6 177 783
- US-B1- 6 181 117
- US-B1- 6 483 682

## Beschreibung

Die vorliegende Erfindung betrifft ein Redundanzmodul zur Entkopplung von Kurzschlussströmen in einer redundanten Spannungsversorgung.

In elektrischen Anlagen, Maschinen und Geräten, an die hohe Anforderungen bezüglich Verfügbarkeit und Ausfallsicherheit gestellt werden, sind die zum Beispiel für Steuerungs- und sicherheitsrelevante Funktionen durch redundante Spannungsversorgungen bereitgestellt. Diese Redundanz wird beispielsweise durch wenigstens zwei gekoppelte Netteile gewährleistet, die im Parallelbetrieb die jeweiligen Einrichtungen versorgen. Die Ausgangsleistung der einzelnen Netzteile ist dabei so bemessen, dass zumindest beim Ausfall eines der Netzteile die benötigte elektrische Leistung durch die restlichen Netzteile weiterhin bereitgestellt wird.

Die parallel geschalteten Netzteile sind Ausgangsseitig zu einem gemeinsamen Stromknoten geführt, von dem aus die gesamte bereitgestellte elektrische Leistung an jeweilige Verbraucher einer Anlage, einer Maschine oder eines Geräts verteilt wird. Damit der gemeinsame Stromknoten bei einem ausgangsseitigen Kurzschluss in einem der Netzteile, der in Folge eines Defekts in dem Netzteil auftreten könnte, nicht durch den resultierenden Kurzschlussstrom belastet werden kann, ist es erforderlich, die Netzteile für diesen Fall voneinander zu entkoppeln. In der Regel werden hierfür sogenannte Redundanzmodule verwendet, die für jedes der parallel zuschaltenden Netzteile einen separaten Eingang bereitstellen, wobei jeder dieser Eingänge über eine Entkopplungsdiode auf einen gemeinsamen Ausgang geführt ist. Eine solche auch als O-Ringschaltung bekannte Schaltung entkoppelt ein kurzgeschlossenes Netzteil von dem gemeinsamen Stromknoten am Ausgang des Redundanzmoduls, in den alle parallelen Netzteile ihren Ausgangsstrom im Normalbetrieb einspeisen. Fällt z.B. die Ausgangsspannung eines Netzteils im Kurzschlussfall auf Nullpotential ab, so entsteht zwischen dem zugehörigen Eingang und dem Stromknoten am Ausgang des Redundanzmoduls ein negativer Spannungsabfall, so dass die Entkopplungsdiode einen möglichen Kursschlussstrom sperrt.

Damit bei den Entkopplungsdioden im normalen Betreib eine möglichst geringe Verlustleistung anfällt werden in einem Redundanzmodul in der Regel Schottky-Dioden verwendet, die sich durch eine geringe Durchlassspannung in der Größe von etwa 400 mV auszeichnen. Entsprechende Redundanzmodule sind auch in Form sogenannter O-Ring-Dioden als integrierte Bauelemente bekannt.

Aus der Schrift US 2005/078424 A1 ist eine redundante Stromversorgung mit mehreren Stromquellen bekannt, wobei ein Fehlerfall betreffend eine Überspannung einer der Stromquellen betrachtet wird. Aus dem Dokument US 5 672 958 A ist ferner ein Rückkopplungs-Erfassungssystem zur Steuerung der Leistung an einer Last in einem redundanten Stromversorgungssystem mit mehreren Stromversorgungen bekannt. Schließlich ist aus dem Dokument WO 2007/140203 A ein System mit mehreren Stromquellen für eine medizinische Vorrichtung bekannt.

Nachteilig bei den bekannten Redundanzmodulen ist, dass die parallelbetriebenen redundanten Netzteile beim Einspeisen in den gemeinsamen Stromknoten ungleichmäßig stark belastet werden, wodurch sich die Lebensdauer einzelner Netzteile verkürzt. Ein weiterer Nachteil bekannter Redundanzmodule ist, dass die Funktionsfähigkeit der Entkopplungsdioden und das Vorhandensein der Redundanz nicht überwacht werden kann.

Der Erfindung liegt die Aufgabe zugrunde, eine redundante Spannungsversorgung mit wenigstens zwei Netzteilen bereitzustellen, mit der die Verfügbarkeit von Anlagen, Maschinen oder Geräten signifikant erhöht wird und mit der insbesondere die oben genannten Nachteile vermieden werden.

Zur Lösung dieser Aufgabe schlägt die vorliegende Erfindung ein Redundanzmodul zur Entkopplung von Kurzschlussströmen in einer redundanten Spannungsversorgung mit wenigsten zwei Netzteilen vor.

Das Redundanzmodul weist eine Anzahl von Eingängen auf, die wenigstens der Anzahl der Netzteile entspricht, wobei die Eingänge jeweils über einen separaten Strompfad auf einen gemeinsamen Stromknoten eines Ausgangs zum Bereitstellen eines Ausgangstromes geführt sind und jeder der Strompfade eine Entkopplungsstrecke bildet. Jeder Entkopplungsstrecke sind wenigstens ein Messelement zum Messen der Eingangsspannung, dem Eingangsstrom und/oder der Eingangsleistung sowie ein Stellglied zur Regulierung zugeordnet.

Ein solches Redundanzmodul ermöglicht eine vorteilhafte Regulierung der Pfadströme und Spannungsabfälle jeder Entkopplungstrecke.

Die Messelemente und die Stellglieder können mit einer Steuerungs- und Regelungseinrichtung verbunden sein, die dazu ausgebildet ist, Strom, Spannung, und/oder Leistung zu regulieren.

Mit der vorliegenden Erfindung wird ein Redundanzmodul mit aktiven Entkopplungsstrecken bereitgestellt, mit denen die Ströme durch die Strompfade zwischen der jeweiligen Anzahl von Eingängen zu dem gemeinsamen Stromknoten am Ausgang des Redundanzmoduls regelbar sind, so dass der Gesamtstrom der am Ausgang des Redundanzmoduls bereitgestellt wird symmetrisch auf gleich große Pfadströme bzw. durch unterschiedlich vorgegebene Pfadströme verteilbar ist.

Die Steuerungs- und Regelungseinrichtung kann zum Beispiel in einem Mikrokontroller realisiert sein, welcher Digital-Analog-Wandler zum Ansteuern der Stellglieder und Erfassen von Messwerten umfasst.

Die Steuerungs- und Regelungseinrichtung kann ausgebildet sein, den Ausgangstrom auf die Strompfade symmetrisch oder auf Ströme mit definierten Verhältnissen zu verteilen.

Das Stellglied kann einen MOSFET und das Messelement ein Messwiderstand umfassen, wobei MOSFET und Messwiderstand eine Reihenschaltung im Strompfad der Entkopplungsstrecke bilden.

An einem Messwiderstand, der mit einem MOSFET in einer Entkopplungsstrecke eine Reihenschaltung bildet, ist über den Spannungsabfall der durch den Strompfad fließende Strom einer Entkopplungsstrecke bestimmbar, der als Parameter für eine Stromregelung dient. Durch eine solche Strommessung kann im Strompfad in vorteilhafter Weise ein niederohmiger Messwiderstand als Messelement verwendet werden, so dass die in der Entkopplungsstrecke abfallende Verlustleistung gering ist.

Alternativ zu einem ohmschen Messwiderstand kann auch eine mit dem MOSFET in Reihe geschalteten Diode zum Erfassen des Pfadstroms in der Entkopplungsstrecke eingesetzt werden. Ebenso ist eine induktive Strommessung möglich.

Anstelle einer Stromessung kann im Rahmen der Erfindung auch die Spannung am Ausgang eines jeweiligen Stellgliedes erfasst werden, so dass das Stellglied Spannungsgeregelt ansteuerbar ist.

Grundsätzlich kommen als Stellglieder auch andre steuerbare Halbleiterbauelemente z.B. IGBT oder Bipolartransistoren in Betracht.

In dem Redundanzmodul kann zu dem MOSFET jeder Entkopplungsstrecke eine Diode parallel geschaltet sein, um den Transistor vor Überströmen zu schützen, die zum Beispiel durch einen Kurzschluss am Ausgang des Redundanzmoduls hervorgerufen werden können.

Bevorzugt könnte dem Messelement jeder Entkopplungsstrecke ein Messverstärker zugeordnet sein. Mit dem Messverstärker können geringste Spannungsdifferenzen am Messwiderstand erfasst und für die Steuerungs- und Regelungseinrichtung aufbereitet werden. Dies ermöglicht die Verwendung äußerst niederohmiger Messwiderstände für eine weitere Reduzierung von Verlustleistungen in einer Entkopplungsstrecke.

Die Entkopplungsstrecken können zusätzlich Messelemente zur Überwachung der Temperatur und der Eingangsspannung umfassen, die mit der Regeleinrichtung verbunden sind. Die Entkopplungsstrecken sind somit durch die Steuerungs- und Regelungseinrichtung überwachbar.

Das Redundanzmodul ist durch seine Regelungseinrichtung dazu ausgebildet, einen Ausfall oder einen Kurzschluss im Netzteil am Eingang jeder Entkopplungsstrecken zu erfassen und einen betroffenen Strompfad abzuschalten, indem der Transistor in dem jeweiligen Strompfad gesperrt wird.

Durch eine solche aktive Entkopplung von eingangsseitigen Kurzschlüssen kann mit der vorliegenden Erfindung auf eine Entkopplungsdiode in den jeweiligen Strompfaden verzichtet werden.

Selbstverständlich kann anstelle der aktiven Entkopplung weiterhin eine Kurzschlussstromentkopplung über eine Schottky-Diode vorgesehen sein.

Die Steuerungs- und Regelungseinrichtung eines Redundanzmoduls kann eine Anzahl digitaler und/oder analoger Schnittstellen umfassen, die zur Diagnose, Programmierung und Parametrierung sowie zur Kommunikation mit anderen Steuerungs- und Regelungseinrichtung einer Anlage, Maschine oder Geräts ausgebildet sind.

Somit können beispielsweise Ausfälle einzelner redundanter Netzteile oder drohende thermische Überlastung einer Entkopplungsstrecke Signalisiert werden, so dass eine Anlage, Maschine oder Gerät gegebenenfalls in einen Sicherenzustand überführt werden können.

Ein Redundanzmodul kann wenigstens ein zweites Redundanzmodul zum Ausgang parallel geschaltet haben, wobei die parallel geschalteten Redundanzmodule ausgebildet sind, miteinander zu kommunizieren und eine gemeinsame Reglung für eine symmetrische oder definierte Stromverteilung auf alle Entkopplungsstrecken bereitzustellen.

Die Erfindung ermöglicht somit eine dezentrale redundant ausgelegte Stromeinspeisung durch in eine gemeinsame Sammelschiene bzw. Versorgungsleitung, wobei durch die Kommunikation der Steuerungs- und Regelungseinrichtungen eine symmetrische Verteilung der Ströme bzw. der Leistung auf alle Netzteile möglich ist. Dieses ist insbesondere bei Nachrüstungen zusätzlicher Netzteile vorteilhaft.

Die Erfindung umfasst des Weiteren ein Verfahren zum Bereitstellen einer redundanten Spannungsversorgung mit wenigsten zwei Netzteilen und einem erfindungsgemäßen Redundanzmodul, welches die folgenden Schritte umfasst:
(a) Erfassen der an den Entkopplungsstrecken anliegenden Eingangsspannungen;
(b) Deaktivieren der Stellglieder in den Entkopplungsstrecken, an denen keine Spannung anliegt;
(c) Feststellen, an welcher Entkopplungstrecke am Eingang die kleinste positive Eingangsspannung anliegt;
(d) Einstellen des Stellgliedes im Strompfad der Entkopplungsstrecke, an der die kleinste positive Eingangsspannung bereitgestellt wird, auf einen minimalen Widerstandswert;
(e) Erfassen von Messwerten der Pfadströme, Spannungen und/oder Leistungen in allen Entkopplungsstrecken;
(f) Regeln der Stellglieder der wenigstens einen weiteren Entkopplungsstrecke, wobei als Sollwert für eine jeweilige Regelung der Messwert der Entkopplungsstrecke, an der die kleinste Eingangsspannung anliegt, vorgegeben wird.

Das Stellglied kann in Abhängigkeit des durch die Entkopplungsstrecke fließenden Stromes geregelt werden.

Der absolute Wert für den Strom durch jeden der geregelten Strompfade ergibt sich aus dem Gesamtstrom, der durch den Ausgang zur angeschlossenen Last fließt.

Der Strompfad der Entkopplungsstrecke, an dem die geringste Eingangsspannung festgestellt wurde, wird nicht geregelt, so dass der entsprechende Pfadstrom als Bezugsgröße für den Sollwert jeder Regelung des wenigstens einen weiteren Stromfades zugeführt werden kann. Mit dem Ausregeln der Regelabweichungen stellt sich ein Stromgleichgewicht zwischen den Pfaden ein.

Alternativ wird das Stellglied in Abhängigkeit seiner Ausgangsspannung geregelt.

Mit dem Verfahren kann die Eingangsspannungen an den Eingängen des Redundanzmoduls kontinuierlich überwacht werden, so dass bei Ausfall oder Kurzschluss eines Netzteils die zugeordnete Entkopplungsstrecke abgeschaltet wird. Somit kann diese aus der Regelung herausgenommen werden, so dass die Anlage, die Maschine oder das Gerät durch die in der Regelung verbleibenden Netzteile weiter versorgt werden.

Die Erfindung wird nachfolgend anhand einer beispielhaften Ausführungsform unter Bezugnahme der beigefügten Zeichnungen detailliert beschrieben. In den Zeichnungen zeigen:
- Fig. 1:: eine Funktionsweise eines Redundanzmoduls mit zwei Entkopplungsstrecken mit veränderbaren Widerständen;
- Fig. 2:: eine erste Ausführungsform eines Redundanzmoduls mit zwei parallel geschalteten Entkopplungsstrecken, die jeweils eine Entkopplungsdiode und einen ansteuerbaren bzw. regelbaren MOSFET enthalten;
- Fig. 3:: eine zweite Ausführungsform eines Redundanzmoduls mit zwei Entkopplungsstrecken, wobei zu den MOSFET jeweils eine Diode parallel geschaltet ist;
- Fig. 4:: eine dritte bevorzugte Ausführungsform eines Redundanzmoduls mit zwei Entkopplungsstrecken mit ansteuerbaren bzw. regelbaren MOSFET ohne in Reihe geschaltete Entkopplungsdioden;
- Fig. 5:: ein vollständiges Redundanzmodul mit zwei parallel arbeitenden Entkopplungsstrecken sowie einer Steuerungs- und Regelungseinheit.

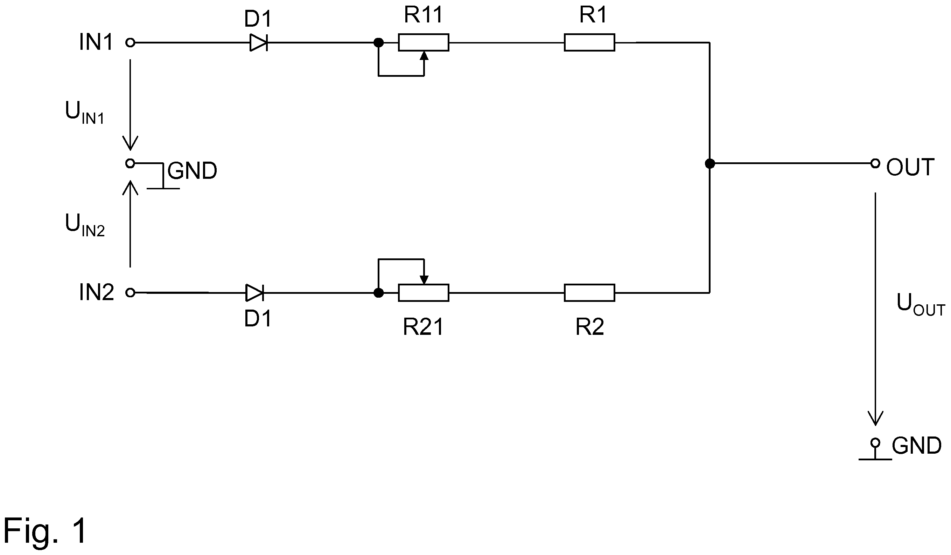

Anhand der Figur 1 kann die Funktionsweise eines Redundanzmoduls mit zwei Entkopplungsstrecken erläutert werden. Zwei in der Figur nicht dargestellte Netzteile werden sekundärseitig mit den Eingängen IN1 und IN2 des Redundanzmoduls verbunden und stellen die Spannungen U1 und U2 an den Eingängen der Strompfade bereit. Eine ebenfalls in der Figur nicht dargestellte Last, die durch das Redundanzmodul gespeist werden soll, ist an dem Ausgang OUT der Schaltung anschließbar. Der Ausgang bildet einen gemeinsamen Stromknoten für die Ausgänge der Stromfade aller Entkopplungsstrecken. Das Bezugspotential GND ist mit den entsprechenden Anschlüssen der Netzteile verbunden.

Die Dioden D1 und D2 sind Entkopplungsdioden, die bei einem Kurzschluss eines Eingangs einen Rückstrom von dem Ausgang OUT des Redundanzmoduls zu dem kurzgeschlossenen Eingang verhindern sollen.

Die veränderbaren Widerstände R1 und R2 stellen beispielhaft die Stellglieder der Regelkreise dar, mit denen die Strombalance zwischen den Strompfaden der speisenden Netzteile geregelt werden kann. Die Pfadströme werden jeweils über einen Messwiderstand R1 und R2 gemessen.

Zur Regelung der Strombalance wird der veränderbare Widerstand in einem ersten Strompfad, d.h. dem Strompfad, an dessen Eingang die kleinere Eingangsspannung anliegt, auf den minimalen Widerstandwert eingestellt. Der veränderbare Widerstand in einem zweiten Strompfad, d.h. dem anderen der beiden dargestellten Strompfade ist das aktive Stellglied einer Regelung, mit dem die Strombalance geregelt wird. Die gemessenen Ströme beider Strompfade werden einer Regeleinrichtung zugeführt, wobei der Strom des Pfades mit der kleineren Eingangsspannung den Sollwert für die Regelung des zweiten Strompfades bildet.

In Abhängigkeit der Regelabweichung, die sich aus der Differenz zwischen dem ersten und dem zweiten Pfadstrom ergibt, wird der Wert des aktiven veränderbaren Widerstands im zweiten Strompfad solange variiert, bis beide Ströme aneinander angeglichen sind. Durch den Regelvorgang werden stets beide Pfadströme beeinflusst, da sich die Summe der beiden Pfadströme aus dem Gesamtstrom durch den Ausgang der Schaltung ergibt, der von der angeschlossenen Last vorgegeben wird und zumindest abschnittsweise zeitlich konstant ist.

Die vorliegende Erfindung ermöglicht auch den parallelen Betrieb von drei oder mehr Netzteilen, in dem jeweils der Pfadstrom einer Entkopplungsstrecke, an der das Netzteil mit der kleinsten Ausgangsspannung angeschlossen ist, als Sollwert den Regelkreisen für die weiteren Strompfade festgelegt wird. Da die Summe aller Pfadströme durch die Last am Ausgang vorgegeben ist, werden alle Strompfade mit einer symmetrische Strombelastung aufeinander ausbalanciert.

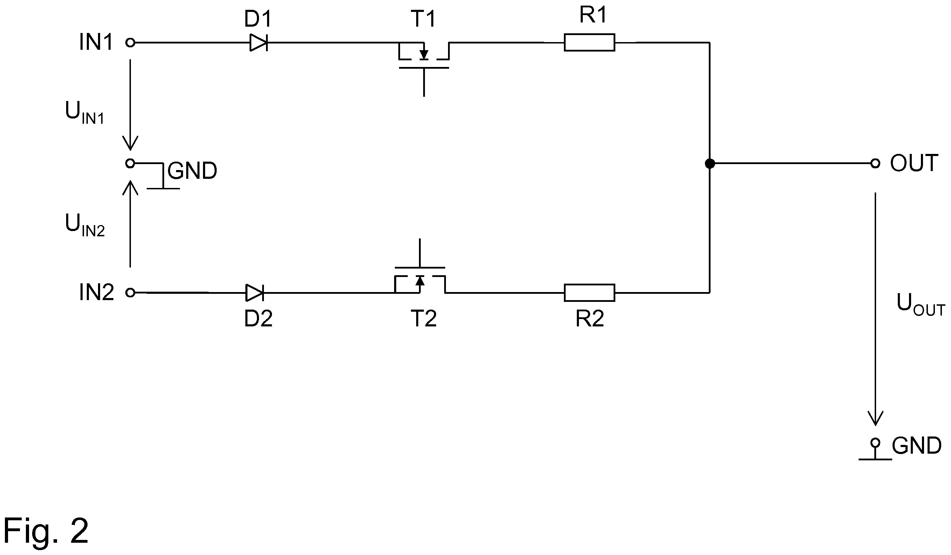

In der Figur 2 ist eine erste Ausführungsform von zwei parallelen Entkopplungsstrecken dargestellt. Die Dioden D1 und D2 sind bevorzugt als Schottky-Dioden ausgeführt, die sich durch eine geringe Durchlassspannung von etwa 400 mV auszeichnen und somit gegenüber Siliziumdioden geringere Leistungsverluste in den Strompfaden hervorrufen. Die veränderbaren Widerstände sind als MOS-Transistoren T1 und T2 dargestellt, die im Linearbetrieb arbeiten. Mit einer darstellungsgemäßen Schaltung können große Unterschiede in den Ausgangsspannungen der angeschlossenen Netzteile ausgeglichen werden.

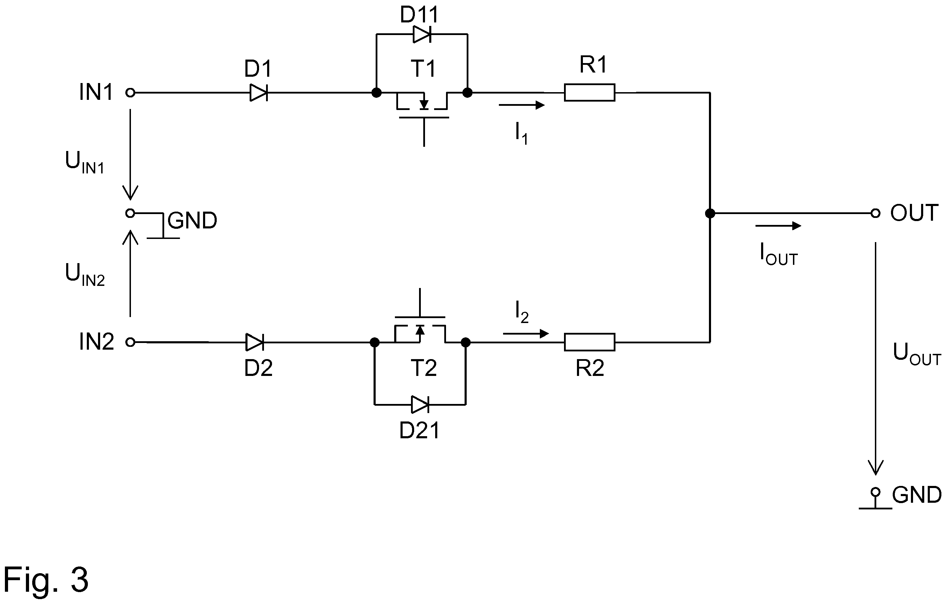

Die Figur 3 zeigt eine weitere Ausführungsform eines Redundanzmoduls mit zwei parallel geschalteten Entkopplungsstrecken. Die Transistoren T1 und T2 weisen gegenüber der Darstellung in Figur 2 jeweils zusätzlich eine parallel geschaltete Diode D11 und D21 auf. Diese dienen dem Schutz vor Überströmen, z.B. für den Fall eines Kurzschlusses am Ausgang des Redundanzmoduls. Sobald die zwischen Drain und Source des MOSFET abfallende Spannung die Durchlassspannung einer jeweiligen Diode übersteigt, so kann diese den Pfadstrom übernehmen und den Transistor vor einem Durchbruch schützen. Bevorzug werden für die Dioden D11 und D21 Schottky-Dioden verwendet. In diesen Fall können Spannungsunterschiede in den Netzteilen von bis zu 400 mV durch die Regelung der Pfadströme ausgeglichen werden.

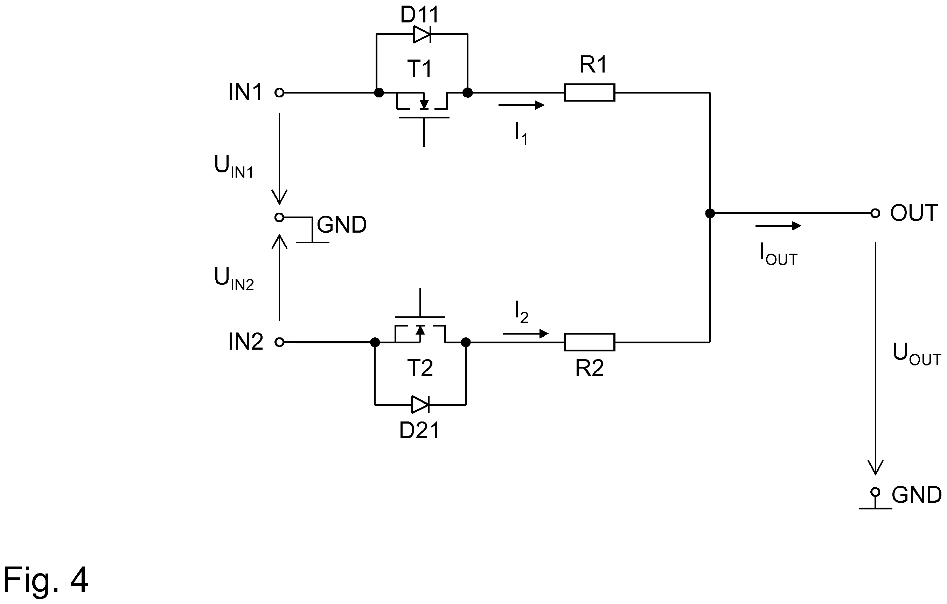

In Figur 4 ist eine besonders bevorzugte Ausführungsform zweier parallel geschalteter Entkopplungsstrecken für ein Redundanzmodul mit symmetrisch regelbaren Pfadströmen dargestellt. Ein besonderer Vorteil an einem erfindungsgemäßen Redundanzmodul ist, das prinzipiell auf die Entkopplungsdioden herkömmlicher Redundanzmodule verzichtet werden kann. Wie im weiteren beschrieben werden wird, ist die Steuerungs- und/oder Regeleinrichtung eines erfindungsgemäßen Redundanzmoduls mit Mitteln versehen, die eine Überwachung der Eingangsspannungen ermöglichen. Bei einem eingangsseitigen Kurzschluss, der z.B. in einem der Netzteile hervorgerufen wird, kann der zugeordnete Strompfad mit dem jeweiligen Transistor abgeschaltet werden, so dass ein Rückfließen des Ausgangsstromes aus dem Stromknoten aktiv unterdrückt wird. Die zu den MOSFET parallel geschalteten Dioden D12 und D21 ermöglichen einen Notbetrieb des Redundanzmoduls für den Fall, dass die Regeleinrichtung und/oder die Transistoren ausfallen.

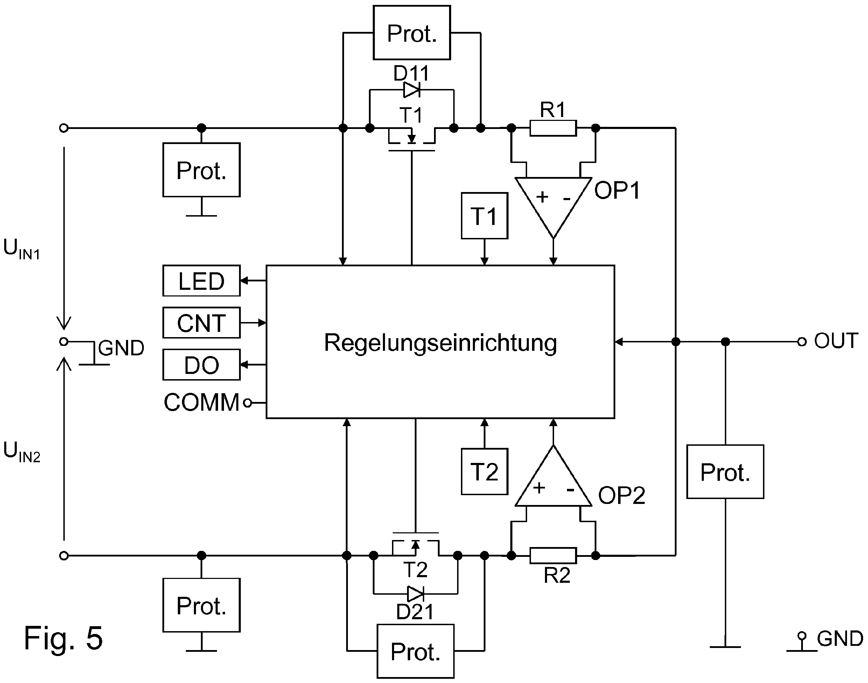

Die Figur 5 zeigt ein vollständiges Redundanzmodul mit zwei parallel arbeitenden Entkopplungsstrecken und einer mit diesen Modulen in Verbindung stehenden Steuerungs- und Regelungseinrichtung. Die Regelungseinrichtung ist z.B. durch einem Mikrocontrollerbaustein und zugehöriger Peripherie implementiert, und stellt neben der Stromregelung für die Strompfade zahlreiche Ein-/Ausgabe-Schnittstellen bereit. Diese umfassen beispielsweise die Leuchtdioden LED, die zu Diagnosezwecken und zur Anzeige von Betriebsarten, Warnungen, Alarmen und Fehlern dienen, Bedienelemente CNT z.B. zum Einstellen eine Betriebsart oder digitale Ausgänge DO, die mit Relaiskontakten oder elektronischen Treibern realisiert werden. Über die Schnittstelle COMM kann das Redundanzmodul mit übergeordneten Steuerungen von Anlagen, Geräten oder Maschinen kommunizieren.

Die Entkopplungsstrecken entsprechen im Wesentlichen denen, die in der Figur 4 bereits beschrien worden sind, und umfassen jeweils einen MOSFET T1 bzw. T2 mit einer parallel geschalteten Schottky-Diode D11 bzw. D21 und einen in Reihe geschalteten niederohmigen Messwiderstand. Jeder Entkopplungsstrecke ist ein Temperaturfühler zugeordnet, mit denen die MOSFET zu Diagnosezwecken überwacht werden können. Die Messwiderstände verfügen zur Verstärkung der gemessenen Spannungsdifferenz, die im linearen Zusammenhang mit dem jeweiligen Pfadstrom durch den Widerstand korrespondiert, über einen parallel geschalteten Messverstärker OP1 bzw. OP2.

Eingangsseitig ist an jeder Entkopplungsstrecke ein Spannungsabgriff vorgesehen, mit der die Eingangsspannung jedes Strompfades von dem Mikrokontroller der Regeleinrichtung erfassbar ist.

Die Eingänge und der Ausgang des Redundanzmoduls kann optional mit einer Schutzschaltung RPOT beschaltet werden, die z.B. Entstörfilter und/oder Überspannungsfilter beinhalten. Die Transistoren der Strompfade können ebenso mit derartigen Schutzschaltungen beschaltet werden.

Die beiden Eingangsspannungen U1 und U2 werden zur Initiierung der Regelung für eine symmetrische Stromverteilung auf die beiden redundanten Netzteile benötigt. Dazu wird zunächst die von den Netzteilen bereitgestellte Spannung an den Eingängen des Redundanzmoduls abgegriffen und der Regelungseinrichtung zugeführt.

Mit den Spannungen U1 und U2 kann die Funktionsfähigkeit der angeschlossenen Netzteile durch die Regelungseinrichtung überprüft werden. Fällt eine der Spannungen auf das Bezugspotential ab, oder zumindest unter einen festgelegten Schwellwert, so kann der in dem entsprechenden Strompfad zugeordnete Transistor gesperrt werden. Die Regelungseinrichtung wertet diesen Strompfad nicht als den Strompfad mit der kleinsten Eingangsspannung. Die Bezugsgröße für die Regelung wird durch den Strompfad bereitgestellt, der die kleinste gültige Eingangsspannung aufweist. Führt nur noch ein Strompfad den Gesamtstrom, so werden alle Strompfade mit ausgefallener Eingangsspannung abgeschaltet und das Stellglied des Pfades, der den Strom führt, wird auf einen minimalen Widerstandswert eingestellt.

## Patentansprüche

1. Redundanzmodul zur Entkopplung von Kurzschlussströmen in einer redundanten Spannungsversorgung mit wenigsten zwei Netzteilen, mit einer Anzahl von Eingängen (IN1, IN2), die wenigstens der Anzahl der Netzteile entspricht, und einer Steuerungs- und Regelungseinrichtung, wobei die Eingänge (IN1, IN2) jeweils über einen separaten Strompfad auf einen gemeinsamen Stromknoten eines Ausgangs (OUT) zum Bereitstellen eines Ausgangstromes geführt sind und jeder der Strompfade eine Entkopplungsstrecke bildet, bei welcher die durch einen Strompfad fließenden Pfadströme symmetrisch regelbar sind und bei welcher jeder Entkopplungsstrecke wenigstens ein Messelement, welches ausgebildet ist zum Messen der Eingangsspannung und dem Eingangsstrom, sowie ein Stellglied (R1, R2), welches ausgebildet ist zur Regulierung von Strom, Spannung, und/oder Leistung zugeordnet ist, wobei die Messelemente und die Stellglieder mit der Steuerungs- und Regelungseinrichtung verbunden sind, wobei die Regelungseinrichtung mit dem Stellglied (R1, R2) eines jeden Strompfades verbunden ist, wobei die Regelungseinrichtung ausgebildet ist eine Strombalance zwischen den Strompfaden mittels Einstellen eines minimalen Widerstandswertes desjenigen Stellgliedes, an dessen Eingang (IN1, IN2) die kleinste Spannung anliegt, zu regeln, und wobei der Strom des Pfades mit der kleinsten Eingangsspannung den Sollwert für die Regelung bildet, und wobei die Eingangsspannungen an den Eingängen des Redundanzmoduls kontinuierlich überwacht werden, so dass bei Ausfall oder Kurzschluss eines Netzteils der Strom durch die zugeordnete Entkopplungsstrecke abgeschaltet wird.

2. Redundanzmodul gemäß vorstehendem Anspruch, **dadurch gekennzeichnet, dass** die Steuerungs- und Regelungseinrichtung ausgebildet ist, den Ausgangstrom auf die Strompfade symmetrisch oder auf Ströme mit definierten Verhältnissen zu verteilen.

3. Redundanzmodul gemäß vorstehendem Anspruch, **dadurch gekennzeichnet, dass** das Stellglied einen MOSFET (T1, T2) und das Messelement ein Messwiderstand umfasst, wobei MOSFET (T1, T2) und Messwiderstand (R1, R2) eine Reihenschaltung im Strompfad der Entkopplungsstrecke bilden.

4. Redundanzmodul gemäß vorstehendem Anspruch, **dadurch gekennzeichnet, dass** zu dem MOSFET (T1, T2) jeder Entkopplungsstrecke eine Diode (D1, D2) parallel geschaltet ist.

5. Redundanzmodul gemäß einem der vorstehenden Ansprüche, **dadurch gekennzeichnet, dass** dem Messelement (R1, R2) jeder Entkopplungsstrecke ein Messverstärker (OP1, OP2) zugeordnet ist.

6. Redundanzmodul gemäß einem der vorstehenden Ansprüche, **dadurch gekennzeichnet, dass** jede Entkopplungsstrecke eine Entkopplungsdiode (D11, D21) umfasst, die mit dem jeweiligen Stellglied und dem Messelement in Reihe geschaltet ist.

7. Redundanzmodul gemäß einem der vorstehenden Ansprüche, **dadurch gekennzeichnet, dass** den Entkopplungsstrecken Temperaturfühler zugeordnet sind, mit denen die MOSFET zu Diagnosezwecken überwacht werden können, die mit der Steuerungs- und Regelungseinrichtung verbunden sind.

8. Redundanzmodul gemäß vorstehendem Anspruch, **dadurch gekennzeichnet, dass** die Steuerungs- und Regelungseinrichtung ausgebildet ist, einen Ausfall oder einen Kurzschluss in den Netzteilen am Eingang der Entkopplungsstrecken zu erfassen und einen betroffenen Strompfad abzuschalten, wobei das Stellglied geregelt wird in Abhängigkeit des durch die Entkopplungsstrecke fließenden Stromes.

9. Redundanzmodul gemäß einem der vorstehenden Ansprüche, **dadurch gekennzeichnet, dass** die Steuerungs- und Regelungseinrichtung eine Anzahl digitaler und/oder analoger Schnittstellen umfasst, die zur Diagnose, Programmierung und Parametrierung sowie zur Kommunikation mit anderen Steuerungs- und Regelungseinrichtung einer Anlage, Maschine oder Geräts ausgebildet sind.

10. Redundanzmodul gemäß vorstehendem Anspruche, **dadurch gekennzeichnet, dass** wenigstens ein zweites Redundanzmodul zum Ausgang parallel geschaltet ist, wobei die parallel geschalteten Redundanzmodule ausgebildet sind, miteinander zu kommunizieren und eine gemeinsame Reglung für eine symmetrische oder definierte Stromverteilung auf alle Entkopplungsstrecken bereitzustellen.

11. Verfahren zum Bereitstellen einer redundanten Spannungsversorgung mit wenigsten zwei Netzteilen und einem Redundanzmodul gemäß einem der vorstehenden Ansprüche 1, 3, 6 oder 8, umfassend folgende Schritte:
(a) Erfassen der an den Entkopplungsstrecken anliegen Eingangsspannungen;
(b) Deaktivieren der Stellglieder in den Entkopplungsstrecken, an denen keine Spannung anliegt;
(c) Einstellen des Stellgliedes in der Entkopplungsstrecke, an der die kleinste positive Eingangsspannung bereitgestellt wird, auf einen minimalen Widerstandswert;
(d) Erfassen von Messwerten der Ströme und Spannungen in allen Entkopplungsstrecken;
(e) Regeln der Stellglieder der wenigstens einen weiteren Entkopplungsstrecke, wobei als Sollwert für eine jeweilige Regelung der Messwert der Entkopplungsstrecke, an der die kleinste Eingangsspannung anliegt, vorgegeben wird und wobei der Strom des Pfades mit der kleinsten Eingangsspannung den Sollwert für die Regelung bildet.

12. Verfahren nach vorstehendem Anspruch, **dadurch gekennzeichnet, dass** die Eingangsspannungen an den Eingängen des Redundanzmoduls kontinuierlich überwacht werden, so dass bei Ausfall oder Kurzschluss eines Netzteils der Strom durch die zugeordnete Entkopplungsstrecke abgeschaltet wird.

## Claims

1. A redundant module for decoupling short-circuit currents in a redundant voltage supply, comprising at least two power supply units, with a number of inputs (IN1, IN2) corresponding at least to the number of the power supply units, and with a control and regulation device, wherein each input (IN1, IN2) is routed via a separate current path to a common current node of an output (OUT) for providing an output current, and wherein each current path defines a decoupling section, in which the path currents flowing through a current path can be controlled symmetrically, and wherein each decoupling section has associated therewith at least one measuring element which is adapted for measuring the input voltage and the input current, and an adjusting element (R1, R2) which is adapted for regulating current, voltage and/or power, wherein the measuring elements and the adjusting elements are connected to the control and regulation device; wherein
the regulation device is connected to the adjusting element (R1, R2) of each current path, wherein the regulation device is adapted to regulate a current balance between the current paths by setting a minimum resistance value at that adjusting element which has the lowest voltage applied at its input (IN1, IN2); and wherein the current of the path with the smallest input voltage defines the target value for the regulation, and wherein the input voltages at the inputs of the redundancy module are continuously monitored so that in the event of a failure or short circuit of a power supply unit, the current is switched off by the associated decoupling path.

2. The redundant module according to the preceding claim, **characterised in that** the control and regulation device is adapted to distribute the output current to the current paths in a symmetrical manner or to divide it into currents with defined ratios.

3. The redundant module according to the preceding claim, **characterised in that** the adjusting element comprises a MOSFET (T1, T2) and the measuring element comprises a measuring resistor, said MOSFET (T1, T2) and measuring resistor (R1, R2) being connected in series in the current path of the decoupling section.

4. The redundant module according to the preceding claim, **characterised in that** the MOSFET (T1, T2) of each decoupling section has a diode (D1, D2) connected in parallel thereto.

5. The redundant module according to any one of the preceding claims, **characterised in that** the measuring element (R1, R2) of each decoupling section has a measuring amplifier (OP1, OP2) associated therewith.

6. The redundant module according to any one of the preceding claims, **characterised in that** each decoupling section comprises a decoupling diode (D11, D21) which is connected in series with the respective adjusting element and the measuring element

7. The redundant module according to any one of the preceding claims, **characterised in that** the decoupling sections have temperature sensors associated therewith, adapted to monitor the MOSFETs for diagnostic purposes, which are connected to the control and regulation device.

8. The redundant module according to the preceding claim, **characterised in that** the control and regulation device is adapted to detect a failure or a short-circuit in the power supply units at the input of the decoupling sections and to switch off an affected current path, wherein the adjusting element is controlled as a function of the current flowing through the decoupling section.

9. The redundant module according to any one of the preceding claims, **characterised in that** the control and regulation device comprises a number of digital and/or analog interfaces adapted for diagnosis, programming, and parameterization, and for communication with other control and regulation devices of a system, a machine or a device.

10. The redundant module according to the preceding claims, **characterised in that** at least a second redundant module is connected in parallel to the output, wherein the parallel-connected redundant modules are adapted to communicate with each other and to provide a common control for a symmetrical or predefined current distribution to all decoupling sections.

11. A method for providing a redundant voltage supply having at least two power supply units and a redundant module according to any one of the preceding claims 1, 3, 6, or 8, comprising the steps of:
(a) determining the input voltages applied at the decoupling sections;
(b) disabling the adjusting elements in those decoupling sections, at which no voltage is applied;
(c) setting the adjusting element in the decoupling section at which the lowest positive input voltage is provided to a minimum resistance value;
(d) determining current and voltage measurement data in all decoupling sections;
(e) regulating the adjusting elements of the at least one further decoupling section, wherein the measured value of the decoupling section at which the lowest input voltage is applied is predefined as the target value for a respective regulation, and wherein the current of the path with the lowest input voltage defines the target value for the regulation.

12. The method according to the preceding claim, **characterised in that** the input voltages at the inputs of the redundant module are continuously monitored, so that in the case of a failure or short-circuit of a power supply unit, the current through the associated decoupling section is switched off.

## Revendications

1. Module de redondance destiné à découpler des courants de court-circuit dans une alimentation en tension redondante avec au moins deux parties de réseau, avec un nombre d'entrées (IN1, IN2) qui correspond au moins au nombre des parties de réseau, et un dispositif de commande et de réglage, dans lequel les entrées (IN1, IN2) sont guidées à travers un chemin de courant séparé jusque sur un nœud de courant commun d'une sortie (OUT) pour fournir un courant de sortie et chacun des chemins de courant forme un trajet de découplage où les courants de chemin circulant à travers un chemin de courant peuvent être symétriquement réglés et où à chaque trajet de découplage est attribué au moins un élément de mesure, lequel est conçu pour mesurer la tension d'entrée et le courant d'entrée, ainsi qu'un organe d'ajustement (R1, R2), lequel est conçu pour réguler le courant, la tension et/ou la puissance, dans lequel les éléments de mesure et les organes d'ajustement sont raccordés au dispositif de commande et de réglage, dans lequel le dispositif de réglage est raccordé à l'organe d'ajustement (R1, R2) de chacun des chemins de courant, dans lequel le dispositif de réglage est conçu pour régler un équilibre de courant entre les chemins de courant au moyen de l'ajustement d'une valeur de résistance minimale de l'organe d'ajustement au niveau de l'entrée (IN1, IN2) duquel la tension la plus petite s'applique, et dans lequel le courant du chemin avec la tension d'entrée la plus petite forme la valeur nominale pour le réglage, et dans lequel les tensions d'entrée au niveau des entrées du module de redondance sont continuellement surveillées, de sorte que, en cas de défaillance ou de court-circuit d'une partie de réseau, le courant soit coupé par le trajet de découplage attribué.

2. Module de redondance selon la revendication précédente, **caractérisé en ce que** le dispositif de commande et de réglage est conçu pour répartir le courant de sortie sur les chemins de courant symétriquement ou sur des courants avec des conditions définies.

3. Module de redondance selon la revendication précédente, **caractérisé en ce que** l'organe d'ajustement comprend un transistor MOS (T1, T2) et l'élément de mesure comprend une résistance de mesure, dans lequel le transistor MOS (T1, T2) et la résistance de mesure (R1, R2) forment un montage en série dans le chemin de courant du trajet de découplage.

4. Module de redondance selon la revendication précédente, **caractérisé en ce qu'**une diode (D1, D2) est montée parallèlement au transistor MOS (T1, T2) de chaque trajet de découplage.

5. Module de redondance selon l'une des revendications précédentes, **caractérisé en ce qu'**à l'élément de mesure (R1, R2) de chaque trajet de découplage est attribué un amplificateur de mesure (OP1, OP2).

6. Module de redondance selon l'une des revendications précédentes, **caractérisé en ce que** chaque trajet de découplage comprend une diode de découplage (D11, D21) qui est montée en série avec l'organe d'ajustement respectif et l'élément de mesure.

7. Module de redondance selon l'une des revendications précédentes, **caractérisé en ce qu'**aux trajets de découplage sont attribués des capteurs de température avec lesquels les transistors MOS peuvent être surveillés à des fins de diagnostic, qui sont raccordés au dispositif de commande et de réglage.

8. Module de redondance selon la revendication précédente, **caractérisé en ce que** le dispositif de commande et de réglage est formé pour saisir une défaillance ou un court-circuit dans les parties de réseau à l'entrée des trajets de découplage et pour couper un chemin de courant concerné, dans lequel l'organe d'ajustement est réglé en fonction du courant circulant à travers le trajet de découplage.

9. Module de redondance selon l'une des revendications précédentes, **caractérisé en ce que** le dispositif de commande et de réglage comprend un certain nombre d'interfaces numériques et/ou analogiques qui sont conçues pour le diagnostic, la programmation et le paramétrage ainsi que pour la communication avec d'autres dispositifs de commande et de réglage d'une installation, d'une machine ou d'un appareil.

10. Module de redondance selon la revendication précédente, **caractérisé en ce qu'**au moins un deuxième module de redondance est monté parallèlement à la sortie, dans lequel les modules de redondance montés en parallèle sont conçus pour communiquer entre eux et fournir un réglage commun pour une répartition de courant symétrique ou définie jusque sur tous les trajets de découplage.

11. Procédé destiné à fournir une alimentation en tension redondante avec au moins deux parties de réseau et un module de redondance selon l'une des revendications précédentes 1, 3, 6 ou 8, comprenant les étapes suivantes consistant à :
a) saisir les tensions d'entrée s'appliquant au niveau des trajets de découplage ;
b) désactiver les organes d'ajustement dans les trajets de découplage au niveau desquels aucune tension ne s'applique ;
c) ajuster à une valeur de résistance minimale l'organe d'ajustement dans le trajet de découplage au niveau duquel la tension d'entrée positive la plus petite est fournie ;
d) saisir des valeurs de mesure des courants et tensions dans tous les trajets de découplage ;
e) régler les organes d'ajustement de l'au moins un autre trajet de découplage, où en tant que valeur nominale pour un réglage respectif est prédéterminée la valeur de mesure du trajet de découplage au niveau duquel s'applique la tension d'entrée la plus petite et où le courant du chemin avec la tension d'entrée la plus petite forme la valeur nominale pour le réglage.

12. Procédé selon la revendication précédente, **caractérisé en ce que** les tensions d'entrée au niveau des entrées du module de redondance sont continuellement surveillées, de sorte que, en cas de défaillance ou de court-circuit d'une partie de réseau, le courant soit coupé par le trajet de découplage attribué.
